**Europäisches Patentamt**

**European Patent Office**

**Office européen des brevets**

(11) Veröffentlichungsnummer : **0 152 530**
**B1**

(12) EUROPÄISCHE PATENTSCHRIFT

(45) Veröffentlichungstag der Patentschrift :
30.11.88

(51) Int. Cl.⁴ : **E 02 D 27/42, E 04 H 12/22**

(21) Anmeldenummer : **84112151.0**

(22) Anmeldetag : **10.10.84**

(54) Bödenbefestigungsvorrichtung.

(30) Priorität : 16.02.84 CH 746/84

(43) Veröffentlichungstag der Anmeldung :
28.08.85 Patentblatt 85/35

(45) Bekanntmachung des Hinweises auf die Patenterteilung : 30.11.88 Patentblatt 88/48

(84) Benannte Vertragsstaaten :
AT BE CH DE FR GB IT LI NL SE

(56) Entgegenhaltungen :
CH-A-  622 845
GB-A-  511 249
US-A-  656 314
US-A- 3 289 369

(73) Patentinhaber : **Bollmann, Jean-Jacques**
**Flühgasse 49**
**CH-8008 Zürich (CH)**

(72) Erfinder : **Bollmann, Jean-Jacques**
**Flühgasse 49**
**CH-8008 Zürich (CH)**

(74) Vertreter : **Dipl.-Phys.Dr. Manitz Dipl.-Ing., Dipl.-**
**Wirtsch. Finsterwald Dipl.-Ing. Grämkow Dipl.-**
**Chem.Dr. Heyn Dipl.-Phys. Rotermund**
**Morgan, B.Sc.(Phys.) Robert-Koch-Strasse 1**
**D-8000 München 22 (DE)**

## Beschreibung

Die Erfindung betrifft eine Bodenbefestigungsvorrichtung für vom Boden wegstehende Stangen mit einem im Boden verankerbaren Bodenkörper, der unten eine durch eine zentrale Verankerungsschraube relativ zum Boden festlegbare, um eine erste, im wesentlichen senkrecht auf dem Boden stehende Drehachse verdrehbaren Bodenwand, mit oder ohne axial steckverbindbarem Verankerungskörper, darüber eine rundum laufende Seitenwand und oben eine von einer schräg zur Bodenwand verlaufenden kreisringförmigen Auf-lagefläche umgebene Zugangsöffnung von sol-cher Größe aufweist, daß durch die Zugangsöff-nung hindurch die Verankerungsschraube ein-bringbar und zugänglich ist, und mit einem Stan-gentragkörper, welcher oben einen Anschlußbe-reich für die Stange, darunter eine rundum laufende Seitenwand und unten eine eine zur Auflagefläche komplementäre kreisringförmige Stützfläche besitzende Befestigungswand aufweist, welche zur Ermöglichung einer Verdrehung um eine senkrecht auf der Auflage- bzw. Stützfläche verlaufende zweite Drehachse mit einer zentralen Bohrung zur Hindurchführung eines die Befestigungswand mit dem Bodenkörper fest verbindenden, eine feste axiale Klemmverbindung zwischen der Auflagefläche und der Stützfläche herstellenden, senkrecht auf der Auflagefläche bzw. Stützfläche stehenden Gewindebolzens versehen ist, der axial gegen die Befestigungswand verspannt und durch eine Zutrittsöffnung im oberen Bereich des Stangenkörpers zugänglich ist. Unter einer Stange im Sinne der Erfindung ist jedwedes längliche Bauteil zu verstehen, welches mit einem Ende am Boden fest angeordnet werden soll. Es kann sich hierbei um beliebige Profile, zu denen insbesondere auch Hohlprofile gehören, handeln. Der Begriff Bodenbefestigungsvorrichtung ist im weitesten Sinne so zu verstehen, daß er nicht nur horizontale und schrägstehende Böden, sondern auch vertikale oder gar überhängende Wände erfaßt.

Bei einer bekannten Bodenbefestigungsvorrichtung dieser Art (CH-A-622 845) muß der Stangentragkörper durch eine relativ kompliziert aufgebaute, nicht besonders stark belastbare bajonettverschlußartige Verbindungsanordnung am Bodenkörper befestigt werden, so daß an dem Stangentragkörper nur relativ leichte längliche Bauteile, die keiner großen seitlichen Beanspruchungen unterworfen sind, angeordnet werden können. Auf die bajonettverschlußartige Verbindungsanordnung kann aber andererseits nicht verzichtet werden, weil der Stangentragkörper zum Bedienen der zentralen Verankerungsschraube sowie zu deren Einbringen oder Herausnehmen oben offen sein muß.

Weiter ist schon eine Befestigungsvorrichtung für vom Boden wegstehende Stangen mit einem am Boden verankerbaren Bodenkörper bekannt (FR-A-23 13 525), bei der von der Befestigungswand des Stangentragkörpers axial vorstehende Vorsprünge in entsprechende Ringvertiefungen am Bodenkörper eingreifen, um eine einen ausgerichteten Sitz gewährleistende Steckverbindung zwischen dem Bodenkörper und dem Stangentragkörper zu schaffen. Die axiale Verspannung der beiden Körper erfolgt durch mehrere über den Umfang um die zweite Drehachse herum verteilt angeordnete Schrauben. Diese vorbekannte Bodenbefestigungsvorrichtung hat den Nachteil, daß die Befestigungsschrauben bzw. die mit ihnen zusammenwirkenden Muttern und Gegenspannstücke von der dem Boden zugewandten Seite des Bodenkörpers her zugänglich und für die Schraubendurchführungen Umfangslanglöcher vorgesehen sein müssen, so daß die Ausbildung des Bodenkörpers als seitlich durch eine glatte Wand abgeschlossener Zylinder unmöglich, die Montage aufwendig und der Drehwinkel des Stangentragkörpers begrenzt ist. Diese Befestigungsvorrichtung ist für hohe Belastbarkeiten ungeeignet.

Das Ziel der vorliegenden Erfindung besteht darin, eine Bodenbefestigungsvorrichtung der eingangs genannten Gattung zu schaffen, welche sich auch für das sichere Halten von schwergewichtigen und seitlich stark belasteten Stangen, d. h. allgemein länglichen Bauteilen, eignet, gleichwohl aber auf einfachste Weise mit üblichen Werkzeugen montierbar und justierbar ist, wobei insgesamt ein kompakter äußerer Aufbau erzielt werden soll, der der Befestigungsvorrichtung im wesentlichen die Form und das Aussehen eines für die Befestigung von stangenförmigen Bauteilen bzw. Stangen an Boden oder Wänden üblicherweise vorgesehenen Sockels mit praktisch geschlossener Umfangswand gibt, so daß nach dem Montieren am Boden die einzelnen Befestigungselemente von außen nicht sichtbar und auch nicht zugänglich sind.

Zur Lösung dieser Aufgabe sieht die Erfindung vor, daß radial außerhalb der Zugangsöffnung zwischen der Bodenwand und der Befestigungswand eine zur zweiten Drehachse konzentrische, rotationssymmetrische, axiale Steckverbindung vorgesehen ist und daß der zentrale Gewindebolzen im Bereich des Umfanges der Zugangsöffnung jedoch noch radial innerhalb der Steckverbindung durch eine zumindest bei abgenommenem Stangentragkörper von oben zugängliche und betätigbare Schraubverbindung am Bodenkörper befestigt ist.

Erfindungsgemäß wird also der Raum innerhalb der rotationssymmetrischen, einen relativ großen Durchmesser aufweisenden Steckverbindung ausgenutzt, um dort mittels des von oben zugänglichen Gewindebolzens eine zusätzliche feste Verbindung zwischen dem Bodenkörper und dem Stangentragkörper herbeizuführen. Die einzelnen Befestigungselemente sind dabei nicht nur problemlos beispielsweise mittels Steckschlüsseln von oben zugänglich und bedienbar, sondern es wird auch eine äußerst kompakte Unterbringung der Befestigungselemente durch insbesondere radiale Verschachtelung erzielt. In radialer Richtung folgen aufeinander von innen nach außen die Berandung der Zugangsöffnung, die Schraubverbindung bzw. die Schraubverbindungen für die einwandfreie Festlegung des Gewindebolzens am Bodenkörper und schließlich die eine zusätzliche Verbindung zwischen den beiden Körpern darstellende Steckverbindung, die z. B. aus einem axialen Vorsprung an dem einen Körper und einer dazu komplementären Ringvertiefung am anderen Körper bestehen kann.

Nach einer ersten bevorzugten baulichen Ausführungsform ist der Gewindebolzen an einer Fußplatte angeordnet, die im Bereich des Umfanges der Zugangsöffnung durch die Schraubverbindung am Bodenkörper befestigt ist. Im Gegensatz zu der vorbekannten bajonettverschlußartigen Verbindung (CH-A-622 845) wird erfindungsgemäß schon vor der Montage des Stangentragkörpers an dem am Boden befestigten Bodenkörper die Fußplatte mit dem Gewindebolzen, der senkrecht von der Auflage- bzw. Stützfläche wegsteht, fest mit dem Bodenkörper verbunden, so daß sie beim Aufbringen des Stangentragkörpers bereits einen festen Bestandteil des Bodenkörpers bildet. Mit anderen Worten werden erfindungsgemäß die Schritte der Befestigung des Gewindebolzens am Bodentragkörper und des Stangentragkörpers am Bodentragkörper mittels des Gewindebolzens zeitlich getrennt, was die Montage wesentlich erleichtert und außerdem aufgrund der getrennten Anbringung des Gewindebolzens am Bodenkörper eine wesentlich festere, allen Belastungen standhaltende Verbindung gestattet. Insbesondere wird so auch der wesentliche Nachteil der Anordnung nach der FR-A-2 313 525 vermieden, daß während der Montage des Stangentragkörpers der Bodenkörper noch von unten zugänglich sein muß.

Erfindungsgemäß ist also die Verfahrensweise so, daß der für die Verbindung der beiden Körper erforderliche Gewindebolzen bei noch abgenommenem Stangentragkörper mit dem Bodenkörper fest verbunden wird und daß erst dann der Stangentragkörper aufgesetzt und festgeschraubt wird.

Die Befestigung der Fußplatte kann nach einer ersten, besonders bevorzugten Ausführungsform dadurch erfolgen, daß die Fußplatte am Umfang ein Schraubgewinde aufweist, das mit einem Innengewinde am Umfang der kreisförmigen Zugangsöffnung im Bodenkörper die Schraubverbindung bildet. Zwecks einfacher Montage kann am Fuß des Gewindebolzens auf der Fußplatte konzentrisch zum Gewindebolzen ein Sechskant vorgesehen werden, der radial über den Gewindebolzen vorsteht und zum Aufsetzen eines Steckschlüssels dient. Hierdurch kann die Fußplatte nach dem Einschrauben in den Bodenkörper fest angezogen werden.

Bei dieser Ausführungsform wird die Zugangsöffnung durch den Innenumfang des Innengewindes definiert, so daß auch hier die Schraubverbindung — wenn auch nur geringfügig — radial außerhalb der Zugangsöffnung liegt. Auch die Steckverbindung braucht nur ganz geringfügig radial außerhalb der Schraubverbindung angeordnet zu werden.

Es ist aber auch möglich, daß die Fußplatte einen radial außerhalb der Zugangsöffnung liegenden Innenvorsprung des Bodenkörpers überlappt und an diesem durch eine von Schrauben und entsprechenden Gewindebohrungen gebildete Schraubverbindungen befestigt ist. Durch das Erfordernis mehrerer Schrauben ist die Montage in diesem Fall zwar etwas zeitaufwendiger, doch stellt andererseits das Vorsehen mehrerer kleinerer Gewindebohrungen seitlich der Zugangsöffnung statt einer einzigen großen Gewindebohrung in der Zugangsöffnung in manchen Fällen einen Vorteil dar.

Eine besonders einfache Ausführungsform kennzeichnet sich dadurch, daß am Umfang der kreisförmigen Zugangsöffnung ein Innengewinde im Bodenkörper vorgesehen ist, in welches das Außengewinde des mit einem Durchmesser entsprechend dem Durchmesser der Zugangsöffnung ausgebildeten Gewindebolzens eingeschraubt ist.

In diesem Fall wird zwar der Stangentragkörper auf den Bodenkörper aufgesetzt, bevor der einen relativ großen Durchmesser aufweisende Gewindebolzen zur Verbindung der beiden Körper eingeschraubt wird ; dies bringt aber für die Montage deswegen keine Nachteile mit sich, weil die beiden Körper durch die Steckverbindung schon vor dem Einschrauben des Gewindebolzens axial ausgerichtet miteinander einwandfrei verbunden sind und anschließend nur noch der zentrale Gewindebolzen in die miteinander ausgerichteten Zugangsbohrungen der beiden Körper einzustecken bzw. -schrauben ist. Da die Schraubverbindung im Bodenkörper bzw. an einem mit ihm fest verbundenen Innenvorsprung vorgesehen ist, kann auch hier das Einbringen des Gewindebolzens von oben her erfolgen, also ohne daß der Bodenkörper von unten zugänglich sein müßte.

Eine weitere vorteilhafte Ausführungsform der Erfindung kennzeichnet sich dadurch, daß auch zwischen der Bodenwand des Bodenkörpers und einem im Boden befestigten Verankerungskörper eine zur ersten Drehachse konzentrische, rotationssymmetrische axiale Steckverbindung vorgesehen ist. Hier besteht die Möglichkeit, eine einwandfreie Drehung des Bodenkörpers um die erste Achse durchzuführen, was zur genauen Ausrichtung der angebrachten Stange bzw. des angebrachten stangenförmigen Bauteils zweckmäßig ist. Durch die Steckverbindung wird außerdem eine feste Halterung am Boden gewährleistet.

Weder die vorbekannte Bodenbefestigungsvorrichtung nach der CH-A-622 845 noch die nach der FR-A-2 313 525 bilden bei Anordnung über dem Boden einen im wesentlichen zylinderartigen Sockel.

Die Erfindung will daher weiter eine Bodenbefestigungsvorrichtung der eingangs genannten Gattung schaffen, die im wesentlichen die kompakte Ausbildung und das Aussehen eines normalen Sockels mit kreisförmigem Querschnitt hat. Zur Lösung dieser weiteren Aufgabe sieht die Erfindung vor, daß der Bodenkörper und der Stangentragkörper einen im wesentlichen kreiszylindrischen Querschnitt haben. Insbesondere sollen dabei der Bodenkörper und der Stangentragkörper bei Ausrichtung ihrer Zylinderachsen im wesentlichen den gleichen Außendurchmesser aufweisen.

Bei vollständiger axialer Ausrichtung der beiden Körper stellt dieser einen äußerlich ganz normalen Sockel dar, dessen Befestigungselemente von außen nicht zugänglich sind, sofern die Stange im Stangentragkörper unlösbar angebracht ist.

Die Erfindung wird im folgenden beispielsweise anhand der Zeichnung beschrieben ; in dieser zeigt :

Fig. 1 eine teilweise geschnittene Seitenansicht einer ersten Ausführungsform der erfindungsgemäßen Bodenbefestigungsvorrichtung in Anordnung an einen Boden 31,

Fig. 1a eine Abwandlung des Ausführungsbeispiels nach Fig. 1,

Fig. 2 eine zweite Ausführungsform der erfindungsgemäßen Bodenbefestigungsvorrichtung und

Fig. 3 eine dritte Ausführungsform der erfindungsgemäßen Bodenbefestigungsvorrichtung.

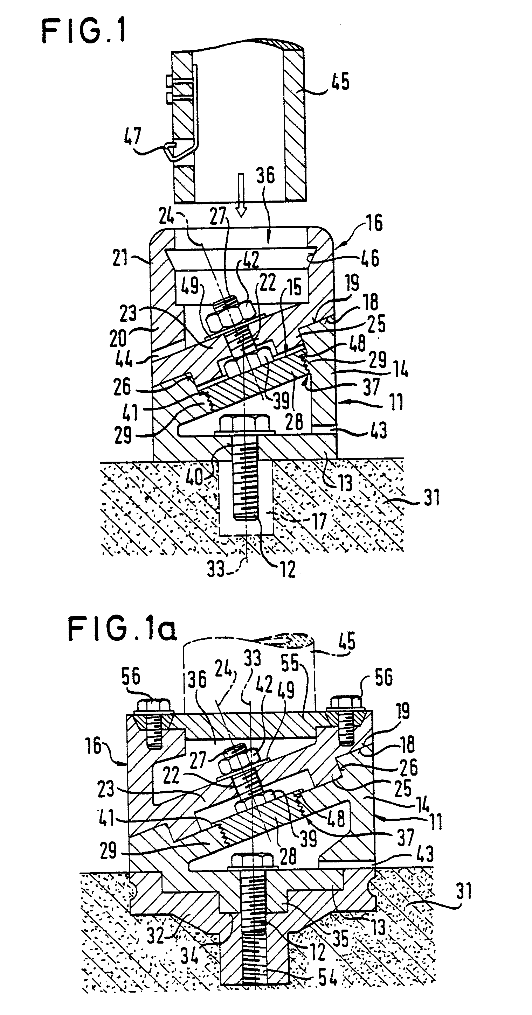

Nach Fig. 1 besteht die erfindungsgemäße Bodenbefestigungsvorrichtung aus einem Bodenkörper 11 mit einer kreisförmigen ebenen Bodenwand 13, die vermittels einer durch eine zentrale Bohrung 40 geführten Verankerungsschrauben 12 am Boden 31 befestigt ist. Die Bodenwand 13 liegt flach auf dem Boden 31 auf, und die Verankerungsschraube 12 ist in eine in Fig. 1 nur gestrichelt angedeutete Unterlage 17 eingeschraubt, bei der es sich z. B. um einen Dübel oder auch einen Stahlträger handeln kann.

Die zentrale Bohrung 40 in der Bodenwand 13 definiert mit ihrer Achse eine erste Drehachse 33, die senkrecht auf der Oberfläche des Bodens 31 steht und um die herum die Bodenwand 13 vor dem Festziehen der Verankerungsschraube 12 in eine gewünschte Stellung verdreht werden kann.

Von der Bodenwand 13 erstreckt sich vom Boden 31 weg parallel zur ersten Drehachse 33 eine im Querschnitt kreiszylindrische Seitenwand 14, die in einer elliptisch ringförmigen schrägen Auflägefläche 18 endet, welche sich aus einem schräg zur ersten Drehachse 33 verlaufenden Schnitt ergibt und unter einem deutlichen Winkel von 20°-25°, insbesondere von 22,5° zur Bodenwand 13 verläuft.

Im oberen Bereich weist die Seitenwand 14 Innenvorsprünge 29 auf, die eine Zugangsöffnung 15 in Form einer parallel zu der Auflagefläche 18 verlaufenden Scheibe definieren, welche in der aus Fig. 1 ersichtlichen Weise nach rechts gegenüber der ersten Drehachse 33 deutlich versetzt ist, so daß die eine zweite Drehachse 24 definierende Mittelachse der kreisförmigen Zugangsöffnung 15 die Bodenwand 13 etwa bei ihrem halben Radius schneidet.

Am Umfang der Zugangsöffnung 15 sind die Innenvorsprünge 29 des Bodenkörpers 11 mit einem Innengewinde versehen, in welches eine kreisscheibenförmige Fußplatte 28 mit entsprechendem Außengewinde von oben eingeschraubt ist, wodurch zwischen der Fußplatte 28 und dem Bodenkörper 11 eine Schraubverbindung 37 gebildet wird. Ein Flansch 41 an der oberen Ebene der Fußplatte 28 arbeitet mit einer Ringstufe 48, die am oberen Ende der Zugangsöffnung 15 radial nach außen vorspringt, zusammen, wodurch die Einschraubtiefe der Fußplatte 28 in die Zugangsöffnung 15 begrenzt wird. Außerdem kann auf diese Weise durch festes Anziehen der eingedrehten Fußplatte 28 eine mittels eines Werkzeuges lösbare Verbindung zwischen der Fußplatte 28 und dem Bodenkörper 11 hergestellt werden.

Von der Mitte der Fußplatte 28 erstreckt sich senkrecht zu ihr ein Gewindebolzen 27, der im Bereich der Verbindung mit der Fußplatte 28 von einem radial etwas über den Gewindebolzen 27 vorstehenden Mehrkant 39 umgeben ist, auf den von oben ein Steckschlüssel aufsetzbar ist.

Auf den Bodenkörper 11 ist nach Fig. 1 ein im wesentlichen zylinderförmiger Stangentragkörper 16 aufgesetzt, wobei der Gewindebolzen 27 sich durch eine zentrale Bohrung 22 in der unten vorgesehenen, senkrecht zur zweiten Drehachse 24, d. h. schräg zur Zylinderachse des Stangentragkörpers 16 verlaufenden Befestigungswand 23 erstreckt, die radial außen eine zur Auflagefläche 18 parallele, ihr zugewandte Stützfläche 19 aufweist. Auf der dem Bodenkörper 11 zugewandten Seite weist die Befestigungswand 23 einen Ringvorsprung 25 auf, der axial in eine Ringvertiefung 26 des Bodenkörpers 11 eingreift und zur zweiten Drehachse 24 konzentrisch und rotationssymmetrisch verläuft. Der Ringvorsprung 25 und die Ringvertiefung 26 bilden eine Steckverbindung, welche den Bodenkörper 11 und den Stangentragkörper 16 formschlüssig, jedoch noch um die zweite Achse 24 verdrehbar miteinander passend verbindet.

Durch Aufschrauben einer Mutter 42 auf das obere Ende des Gewindebolzens 27 nach dem Aufbringen einer Unterlegscheibe 49 werden die an der Unterseite der Befestigungswand 23 am Rand vorgesehene ringförmige Stützfläche 19 und die dazu komplementäre Auflagefläche 18 des Bodenkörpers 11 fest miteinander verbunden.

Von der Befestigungswand 23 erstreckt sich in der aus Fig. 1 ersichtlichen Drehstellung des Stangentragkörpers 16, in der die Mittelachsen des Stangentragkörpers 16 und des Bodenkörpers 11 axial ausgerichtet sind, senkrecht zur Bodenwand 13 eine mit der Seitenwand 14 außen bündige kreiszylinderförmige Seitenwand 20, die oben in einen Anschlußbereich 21 zur Aufnahme einer am Stangentragkörper 16 zu befestigenden Stange 45 mündet. Beim Ausführungsbeispiel nach Fig. 1 ist der Anschlußbereich 21 als gleichzeitig die Zutrittsöffnung 36 zur Mutter 42 bildende Ausnehmung im oberen Bereich des Stangentragkörpers 16 ausgestaltet, in die die als Hohlprofil ausgebildete Stange 45 von oben einsteckbar und mittels einer in eine Rastvertiefung 46 des Stangentragkörpers 16 einschnappenden Federrast 47 festlegbar ist.

An den tiefsten Stellen der Hohlräume des Bodenkörpers 11 und des Stangentragkörpers 16 sind seitlich Löcher 43, 44 zum Austritt von etwa in den Hohlräumen anfallender Flüssigkeit vorgesehen.

Die Montage der erfindungsgemäßen Bodenbefestigungsvorrichtung geht wie folgt vor sich :

Zunächst wird der Bodenkörper 11 mittels der Verankerungsschraube 12 durch Einschrauben derselben in den vorher angeordneten Dübel 17 am Boden 31 befestigt, wobei die Verankerungsschraube 12 durch die Zugangsöffnung 15 hindurch eingebracht und mittels eines durch die Zugangsöffnung 15 hindurchgeführten Steckschlüssels festgezogen wird.

Vor dem endgültigen Festziehen der Verankerungsschraube 12 wird der Stangenkörper 16 auf den Bodenkörper 11 aufgesteckt und mit diesem zusammen so lange verdreht, bis die gewünschte Winkelposition der Stange 45 erforderliche Drehstellung erreicht und diese Position markiert ist.

Alsdann wird die Stange 45 unter Lösung der Rastfeder 47 mit einem Spezialwerkzeug wieder abgehoben und die Verankerungsschraube 12 mit der Unterlage 17 fest verbunden.

Anschließend wird dann die Fußplatte 28 in die Zugangsöffnung 15 eingeschraubt, bis der Flansch 41 auf der am Übergang von der Ringvertiefung 26 in die engere Zugangsöffnung 15 vorhandenen Ringstufe 48 aufliegt. Durch eine auf den Mehrkant 39 aufgesetzten Steckschlüssel wird die Fußplatte 28 festgezogen, so daß zwischen ihr und den Innenvorsprüngen 29 eine die beiden Teile fest miteinander verbindende Schraubverbindung 37 vorliegt.

Anschließend wird dann von oben der Stangentragkörper 16 mit der zentralen Bohrung 22 auf den Gewindebolzen 27 aufgesetzt, wobei gleichzeitig der Ringvorsprung 25 in die Ringvertiefung 26 eintritt. Die axiale Länge des Ringvorsprunges 25 ist so bemessen, daß schließlich die Stützfläche 19 fest auf der Auflagefläche 18 aufliegt.

Sobald dies der Fall ist, kann durch die Zutrittsöffnung 36 hindurch die Mutter 42 unter Zwischenlage der Unterlegscheibe 49 auf das nach oben über die Befestigungswand 23 vorstehende Ende des Gewindebolzens 27 aufgeschraubt und festgezogen werden.

Nunmehr liegt ein für eine sichere Befestigung der Stange 45 geeigneter Sockel vor, in den jetzt nur noch von oben die Stange 45 eingesteckt werden muß, wobei die Rastfeder 47 in die Rastvertiefung 46 einschnappt. Da die Rastfeder 47 nach dem Einschnappen von außen nur mit einem Spezialwerkzeug lösbar ist, ist so die Stange 45 diebstahlsicher am durch die Körper 11, 16 gebildeten Sockel befestigt.

In den folgenden Figuren bezeichnen gleiche Bezugszahlen entsprechende Teile wie in Fig. 1. Nach Fig. 1a ist die Verbindungsschraube 12 nicht direkt mit der Unterlage 17 verbunden, sondern in einen in den Boden 31 eingegossenen Verankerungskörper 32 eingeschraubt, der ebenso wie die Körper 11, 16 ein Gußkörper aus Metall sein kann und mit einer zentralen Bohrung 54 mit Innengewinde zum Einschrauben der Verbindungsschraube 12 versehen ist.

Oben ist der Verankerungskörper 32 mit der Oberfläche des Bodens 31 bündig. Er weist jedoch eine zur Verbindungsschraube 12 konzentrische Ringvertiefung 34 auf, in die ein dazu komplementärer axialer Ringvorsprung 35 an der Unterseite der Bodenwand 13 des Bodenkörpers 11 passend derart eingreift, daß die untere Fläche der Bodenplatte 13 auf der oberen Fläche des Verankerungskörpers 32 aufliegt. Hierdurch wird der Bodenkörper 11 zweistufig 13, 35 sicherer am Boden 31 gehalten und ist außerdem definierter um die erste Drehachse 33 verdrehbar.

Im Unterschied zu dem vorangehenden Ausführungsbeispiel nach Fig. 1 ist die Zutrittsöffnung 36 oben durch eine Platte 55 verschlossen, die an der Unterseite einen konzentrischen radial nach innen weisenden Ringvorsprung aufweist, welcher in eine im Innenvorsprung passende Ringverbindung eingreift und mittels Schrauben 56 über einen zweiteiligen Klemmring an der Oberseite des Stangentragkörpers 16 befestigt ist. Auf der Platte 55 ist eine nur gestrichelt angedeutete Stange 45 von beliebigem Querschnittprofil durch Anschweißen befestigt.

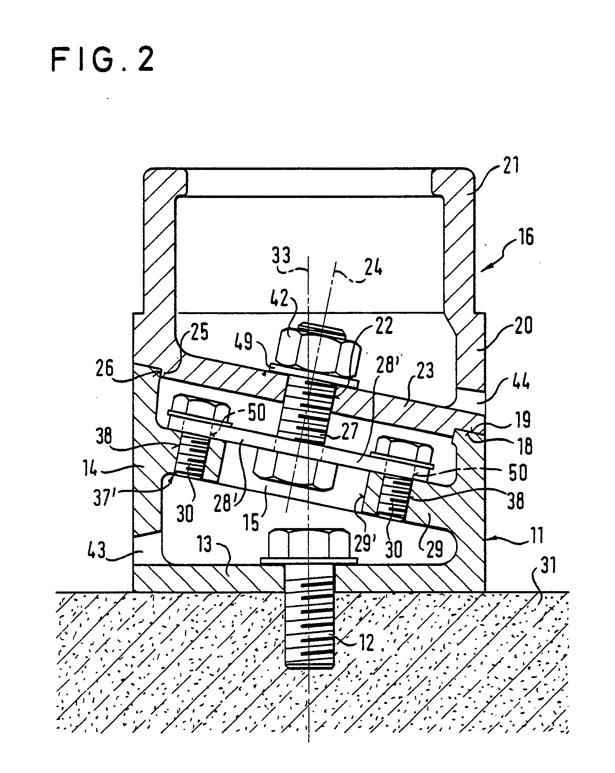

Bei dem Ausführungsbeispiel nach Fig. 2 überlappt die Fußplatte 28' des Gewindebolzens 27 auf der Oberseite den vorzugsweise kreisringförmigen Innenvorsprung 29, dessen Innenumfangsfläche 29' zur zweiten Drehachse 24 konzentrisch ist und die Zugangsöffnung 15 für die Verankerungsschraube 12 definiert.

Der Innenvorsprung 29 weist in gleichmäßigen Winkelabständen parallel zur zweiten Drehachse 24 verlaufende Gewindebohrungen 38 auf, die mit Durchsteckbohrungen 50 in den überlappenden Bereichen der Fußplatte 28' ausgerichtet sind. Durch diese Bohrungen sind mit Köpfen versehene Schrauben 30 hindurchgesteckt und in die Gewindebohrungen 38 eingeschraubt, so daß sich eine Schraubverbindung 37' ergibt, über die der über ein Gewinde oder durch Schweißung an der Fußplatte 28' angeordnete Gewindebolzen 27 formschlüssig mit dem Bodenkörper 11 verbunden ist. Der Ringvorsprung 25 am Stangentragkörper 16 befindet sich hier deutlich radial außerhalb der Gewindeverbindungen 37' und arbeitet wieder mit einer ebenfalls einen sehr großen Radius aufweisenden Ringvertiefung 26 in Form einer Ringstufe zusammen.

Bei diesem Ausführungsbeispiel sind also die Zugangsöffnung 15, die Gewindeverbindungen 37' und die Steckverbindung 25, 26 radial deutlich gegeneinander versetzt.

Die Montage erfolgt analog dem Ausführungsbeispiel nach Fig. 1, d. h., daß der Bodenkörper 11 zusammen mit dem Stangentragkörper 16 in die richtige Winkelposition gebracht und markiert wird. Anschließend wird die Fußplatte 28' mit dem Gewindebolzen 27 durch die Schrauben 30 am Bodenkörper 11 befestigt und auf den Verbindungsbolzen 27 der Stangentragkörper 16 aufgesetzt und mittels der Mutter 42 am Bodenkörper 11 fixiert.

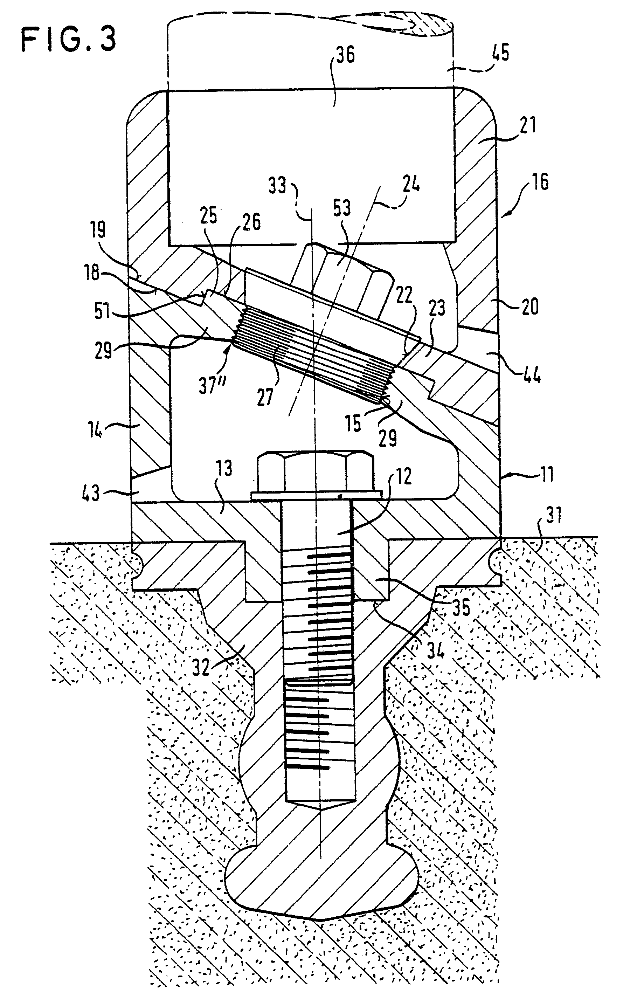

Fig. 3 zeigt eine Ausführungsform, bei der ähnlich wie bei dem Ausführungsbeispiel nach Fig. 1 der ringförmige Innenvorsprung 29 des Bodenkörpers 11 am Umfang der Zugangsöffnung 15 mit einem Innengewinde versehen ist. Radial außerhalb des Innengewindes befinden sich der axiale Ringvorsprung 25 des Bodenkörpers 11 und die dazu komplementäre Ringvertiefung 26 des Stangentragkörpers 16. Der Ringvorsprung 25 und die Ringvertiefung 26 gehen radial außen über eine Ringstufe 51 in die Auflagefläche 18 bzw. Stützfläche 19 über.

Bei dem Ausführungsbeispiel nach Fig. 3 weist die Befestigungswand 23 des Stangenkörpers 16 eine zentrale Bohrung 22 mit einem wesentlich größeren Durchmesser als bei den vorangegangenen Ausführungsbeispielen auf. Der Durchmesser der zentralen konischen Bohrung 22 verläuft in den Durchmesser der damit axial ausgerichteten Zugangsöffnung 15.

Der konische Gewindebolzen 27 greift in die komplementäre Befestigungswand 23 ein. Ein Sechskantkopf 53, der mit dem Gewindebolzen 27 drehfest verbunden ist, dient zum Festziehen mittels eines von oben eingeführten Werkzeuges.

Die Montage bei dieser Ausführungsform geht so vor sich, daß nach der winkelmäßigen markierten Ausrichtung und dem Befestigen des Bodenkörpers 11 über die Verankerungsschraube 12 der Stangentragkörper 16 aufgesetzt wird, worauf dann erst der Gewindebolzen 27 zur Herstellung der Gewindeverbindung 37″ in das Innengewinde des Innenvorsprunges 29 eingeschraubt und fixiert wird, wodurch die beiden Flächen 18, 19 der Körper 11, 16 fest miteinander verbunden werden.

Zuletzt wird die Stange 45 in die Zutrittsöffnung 36 eingeschoben und in geeigneter Weise befestigt.

**Patentansprüche**

1. Bodenbefestigungsvorrichtung für vom Boden (31) wegstehende Stangen (45) mit einem im Boden (31) verankerbaren Bodenkörper (11), bzw. Verankerungskörper, welcher unten eine durch eine zentrale Verankerungs- bzw. Verbindungsschraube (12) relativ zum Boden (31) festlegbare, um eine erste, im wesentlichen senkrecht auf dem Boden (31) stehende Drehachse (33) verdrehbare Bodenwand (13), darüber eine rundumlaufende Seitenwand (14) und oben eine von einer schräg zur Bodenwand (13) verlaufenden kreisringförmigen Auflagefläche (18) umgebene Zugangsöffnung (15) von solcher Größe aufweist, daß durch die Zugangsöffnung (15) hindurch die Verankerungsschraube (12) einbringbar und zugänglich ist, und mit einem Stangentragkörper (16), welcher oben einen Anschlußbereich (21) für die Stange (45), darunter eine rundumlaufende Seitenwand (20) und unten eine eine zur Auflagefläche (18) komplementäre kreisringförmige Stützfläche (19) besitzende Befestigungswand (23) aufweist, welche zur Ermöglichung einer Verdrehung um eine senkrecht auf der Auflage- bzw. Stützfläche (18 bzw. 19) verlaufende zweite Drehachse (24) mit einer zentralen Bohrung (22) zur Hindurchführung eines die Befestigungswand (23) mit dem Bodenkörper (11) fest verbindenden, eine feste axiale Klemmverbindung zwischen der Auflagefläche (18) und der Stützfläche (19) herstellenden, senkrecht auf der Auflagefläche (18) bzw. Stützfläche (19) stehenden Gewindebolzen (27) versehen ist, der axial gegen die Befestigungswand (23) verspannt und durch eine Zutrittsöffnung (36) im oberen Bereich des Stangentragkörpers (16) zugänglich ist, dadurch gekennzeichnet, daß radial außerhalb der Zugangsöffnung (15) zwischen der Bodenwand (13) und der Befestigungswand (23) eine zur zweiten Drehachse (24) konzentrische, rotationssymmetrische, axiale Steckverbindung (25, 26) vorgesehen ist und daß der zentrale Gewindebolzen (27) im Bereich des Umfangs der Zugangsöffnung (15) jedoch noch radial innerhalb der Steckverbindung (25, 26) durch eine bei abgenommenem Stangentragkörper (16) von oben zugängliche und betätigbare Schraubverbindung (37, 37′, 37″) am Bodenkörper (11) befestigt ist.

2. Bodenbefestigungsvorrichtung nach Anspruch 1, dadurch gekennzeichnet, daß der Gewindebolzen (27) an einer Fußplatte (28, 28′) angeordnet ist, die im Bereich des Umfanges der Zugangsöffnung durch die Schraubverbindung (37, 37′) am Bodenkörper (14) befestigt ist.

3. Bodenbefestigungsvorrichtung nach Anspruch 2, dadurch gekennzeichnet, daß die Fußplatte (28) am Umfang ein Schraubgewinde aufweist, das mit einem Innengewinde am Umfang der kreisförmigen Zugangsöffnung (15) im Bodenkörper (11) bzw. an einem ringförmigen Innenvorsprung (29) des Bodenkörpers (11) die Schraubverbindung (37) bildet.

4. Bodenbefestigungsvorrichtung nach Anspruch 2, dadurch gekennzeichnet, daß die Fußplatte (28′) einen radial außerhalb der Zugangsöffnung (15) liegenden Innenvorsprung (29) des Bodenkörpers (11) überlappt und an diesem durch die von Schrauben (30) und entsprechenden Gewindebohrungen (38) gebildete Schraubverbindungen (37′) befestigt ist.

5. Bodenbefestigungsvorrichtung nach Anspruch 1, dadurch gekennzeichnet, daß am Umfang der kreisförmigen Zugangsöffnung (15) ein Innengewinde im Bodenkörper (11) bzw. an einem ringförmigen Innenvorsprung (29) des Bodenkörpers (11) vorgesehen ist, in welches zur Bildung der Schraubverbindung (37″) das Außengewinde des mit einem vergrößerten Durchmesser entsprechend dem Durchmesser der Zugangsöffnung (15) ausgebildeten Gewindebolzens (27) eingeschraubt ist.

6. Bodenbefestigungsvorrichtung nach einem der vorhergehenden Ansprüche, dadurch gekennzeichnet, daß auch zwischen der Bodenwand (13) des Bodenkörpers (11) und einem im Boden (31) befestigten Verankerungskörper (32) eine zur ersten Drehachse (33) konzentrische, rotationssymmetrische axiale Steckverbindung (34, 35) vorgesehen ist.

7. Bodenbefestigungsvorrichtung insbesondere nach einem der vorhergehenden Ansprüche, dadurch gekennzeichnet, daß der Bodenkörper (11) und der Stangentragkörper (16) einen im wesentlichen kreiszylindrischen Querschnitt haben.

8. Bodenbefestigungsvorrichtung nach Anspruch 7, dadurch gekennzeichnet, daß der Bodenkörper (11) und der Stangentragkörper (16) bei Ausrichtung ihrer Zylinderachsen im wesentlichen den gleichen Außendurchmesser aufweisen.

9. Bodenbefestigungsvorrichtung nach einem der vorhergehenden Ansprüche, dadurch gekennzeichnet, daß die kreisringförmige Auflagefläche (18) einen Winkel von 20° bis 25°, insbesondere 22,5° mit der Bodenwand (13) einschließt, um die Zylinderachse des Stangentragkörpers (16) zwischen einer mit der Drehachse (33) ausgerichteten Position bis unter einen Winkel von 40-50°, insbesondere 45° dazu stufenlos verstellen zu können.

**Claims**

1. Ground mounting device for poles (45) projecting away from the ground (31) comprising a base member (11) or anchorage member anchorable in the ground (31), the base member having, at the bottom, a base wall (13) securable relative to the ground (31) by a central anchoring or connection screw (12) and rotatable about a first axis of rotation (33) standing approximately perpendicular to the ground (31), above this a side wall (13) extending around it and, at the top, an access opening (15) surrounded by a circular support surface (18) extending obliquely to the base wall (13) and of such a size that the anchoring screw (12) is introducable and accessible through the access opening (15), and comprising a pole support member (16) which has, at the top, a connection region (21) for the pole (45), beneath this a side wall (20) extending around it and, at the bottom, a mounting wall (23) having a circular support surface (19) complementary to the contact surface (18), wherein, to enable rotation about a second axis of rotation (24) extending perpendicular to the contact or support surface (18, 19, respectively) the mounting wall is provided with a central bore (22) for the through guidance of a threaded bolt (27) which fixedly connects the mounting wall (23) with the base member (11), produces a fixed axially clamped connection between the contact surface (18) and the support surface (19) and stands perpendicular to the contact surface (18) or the support surface (19), with the threaded bolt (27) being clamped against the base wall (23) and being accessible through the entrance opening (36) in the upper region of the pole support member (16), characterised in that a rotationally symmetrical axial plug connection (25, 26) concentric to the second axis of rotation (24) is provided radially outside of the access opening (15) between the base wall (13) and the mounting wall (23) ; and in that the central threaded bolt (27) is secured to the base member (11) in the region of the circumference of the access opening (15), however still radially within the plug connection (25, 26), through a threaded connection (37, 37', 37") which is accessible and actuable from above when the pole support member (16) is removed.

2. Ground mounting device in accordance with claim 1, characterised in that the threaded bolt (27) is arranged on a base plate (28, 28') which is secured to the base member (14) in the region of the periphery of the access opening through the threaded connection (37, 37').

3. Ground mounting device in accordance with claim 2, characterised in that the base plate (28) has a screw thread at the periphery which forms the threaded connection (37) together with an internal thread at the periphery of the circular access opening (15) in the base member (11) or on a ring-like internal projection (29) of the base member (11).

4. Ground mounting device in accordance with claim 2, characterised in that the base plate (28') overlaps an internal projection (29) of the base member (11) lying radially outside of the access opening (15) and is secured to the internal projection by the screw connections (37') formed by screws (30) and corresponding threaded bores (38).

5. Ground mounting device in accordance with claim 1, characterised in that an internal thread is provided at the periphery of the circular access opening (15) in the base member (11) or in an annular internal projection (29) of the base member (11), with the external thread of the threaded bolt (27) which has an enlarged diameter corresponding to the diameter of the access opening (15) being screwed into the internal thread to form the screw connection (37").

6. Ground mounting device in accordance with one of the preceding claims, characterised in that a rotationally symmetrical axial plug connection (34, 35) is also provided between the base wall (13) of the base member (11) and an anchorage member (32) secured in the base (31) and is concentric to the first axis of rotation (33).

7. Ground mounting device, in particular in accordance with one of the preceding claims, characterised in that the base member (11) and the pole support member (16) have an essentially circular cross-section.

8. Ground mounting device in accordance with claim 7, characterised in that the base member (11) and the pole support member (16) have substantially the same outer diameter when their cylinder axes are aligned.

9. Ground mounting device in accordance with one of the preceding claims, characterised in that the circular contact surface (18) subtends an angle of 20° to 25°, in particular 22,5° with the base wall (13) in order to be able to steplessly adjust the cylinder axis of the pole support member (16) between a position aligned with the axis of rotation (33) down to an angle of 40-50°, in particular 45°.

## Revendications

1. Dispositif de fixation au sol pour tiges (45) éloignées du sol (31), comprenant un corps au sol (11) qu'on peut ancrer dans le sol (31) ou bien un corps d'ancrage, qui présente en bas une paroi de sol (13) pouvant être fixée relativement au sol (31) par une vis centrale (12) de liaison ou d'ancrage et pouvant tourner. autour d'un premier axe de rotation (33) se trouvant sensiblement vertical sur le sol (31), au-dessus une paroi latérale (14) circulaire, et en haut un orifice d'accès (15) entouré par une face d'appui (18) en forme de couronne s'étendant obliquement par rapport à la paroi de sol (13) et d'une grandeur telle que la vis d'ancrage (12) puisse être amenée et est accessible à travers l'orifice d'accès (15), et un corps de support de tige (16) qui présente en haut une zone de raccordement (21) pour la tige (45), en dessous une paroi latérale circulaire (20) et en bas une paroi de fixation (23) comportant une face de support (19) en forme de couronne, complémentaire à la face d'appui (18), et qui est munie, pour rendre possible une rotation autour d'un deuxième axe (24) s'étendant perpendiculairement sur la face d'appui ou de support (18 ou 19), d'un alésage central (22) pour y faire passer un boulon fileté (27) reliant la paroi de fixation (23) au corps de sol (11), établissant une liaison fixe axiale de serrage entre la face d'appui (18) et la face de support (19) et se trouvant perpendiculaire à la face d'appui (18) ou la face de support (19), le boulon fileté étant serré axialement contre la paroi de fixation (23) et étant accessible à travers un orifice d'entrée (36) dans la zone supérieure du corps de support de tige (16), dispositif caractérisé en ce que, radialement à l'extérieur de l'orifice d'accès (15) entre la paroi de sol (13) et la paroi de fixation (23), on prévoit une liaison axiale (25, 26) enfichable, symétrique en rotation et concentrique par rapport au deuxième axe de rotation (24), et en ce que le boulon fileté central (27) est fixé au voisinage de la périphérie de l'orifice d'entrée (15) mais cependant encore radialement à l'intérieur de la liaison enfichable (25, 26) par une liaison par vis (37, 37', 37") sur le corps de sol (11), laquelle lorsque l'on retire le corps de support de tige (16) est accessible et actionnable depuis le haut.

2. Dispositif de fixation au sol selon la revendication 1, caractérisé en ce que le boulon fileté (27) est disposé sur une plaque inférieure (28, 28') qui est fixée au voisinage de la périphérie de l'orifice d'entrée par la liaison par vis (37, 37') du corps de sol (14).

3. Dispositif de fixation au sol selon la revendication 2, caractérisé en ce que la plaque inférieure (28) présente sur sa périphérie un filetage de vis qui forme la liaison par vis (37) avec un taraudage interne sur la périphérie de l'orifice d'entrée circulaire (15) dans le corps de sol (11) ou sur une saillie interne annulaire (29) du corps de sol (11).

4. Dispositif de fixation au sol selon la revendication 2, caractérisé en ce que la plaque inférieure (28') chevauche une saillie interne (29) du corps de sol (11) se trouvant radialement à l'extérieur de l'orifice d'entrée (15) et est fixée à cet endroit par les liaisons par vis (37') formées par des vis (30) et des alésages taraudés correspondants (38).

5. Dispositif de fixation au sol selon la revendication 1, caractérisé en ce que, sur la périphérie de l'orifice d'entrée circulaire (15) on prévoit un taraudage interne dans le corps de sol (11) ou bien sur une saillie interne circulaire (29) du corps de sol (11) ; le filetage externe du boulon fileté (27) conformé avec un diamètre renforcé en correspondance avec le diamètre de l'orifice d'entrée (15) étant alors vissé dans ce taraudage pour former la liaison par vis (37").

6. Dispositif de fixation au sol selon l'une des revendications précédentes, caractérisé en ce qu'on prévoit également entre la paroi de sol (13) du corps de sol (11) et un corps d'ancrage (32) fixé dans le sol (31) une liaison enfichable (34, 35) axiale, symétrique en rotation et concentrique par rapport au premier axe de rotation (33).

7. Dispositif de fixation au sol en particulier selon l'une des revendications précédentes, caractérisé en ce que le corps de sol (11) et le corps de support de tige (16) ont une section transversale sensiblement cylindrique.

8. Dispositif de fixation au sol selon la revendication 7, caractérisé en ce que le corps de sol (11) et le corps de support de tige (16) présentent lors de l'alignement de leurs axes de cylindre sensiblement le même diamètre externe.

9. Dispositif de fixation au sol selon l'une des revendications précédentes, caractérisé en ce que la face d'appui en forme de couronne (18) inscrit un angle de 20° à 25°, en particulier 22,5°, avec la paroi de sol (13), pour pouvoir déplacer sans gradation l'axe de cylindre du corps support de tige (16) entre une position alignée sur l'axe de rotation (33) et une position faisant jusqu'à un angle de 40-50°, en particulier 45°, avec celui-ci.

0 152 530

FIG.1

FIG.1a

1

# FIG. 2

# FIG. 3